# EUROPEAN PATENT APPLICATION

(11) **EP 2 266 406 A1**
(43) Date of publication of application: **29.12.2010**
(21) Application number: 10164056.3
(22) Date of filing: 27.05.2010
(51) Int. Cl.: A21D 13/00, A21D 2/26, A21D 13/08, A23L 1/305, A23L 1/307

(54) **Aerated baked products**

(30) Priority: 02.06.2009 EP 09161684; 02.06.2009 EP 09161685
(71) Applicant: Unilever PLC, A Company Registered In England And Wales under company no. 41424 of Unilever House, London, Greater London EC4Y 0DY (GB); Unilever NV, 3013 AL Rotterdam (NL)
(72) Inventor: Aaldred, Deborah, Lynne, Bedford, Bedfordshire MK44 1LQ (GB); Watts, Karen, Margaret, Bedford, Bedfordshire MK44 1LQ (GB); Wix, Loyd, Bedford, Bedfordshire MK44 1LQ (GB)
(74) Representative: Clarke, Christopher John

(57) **Abstract**

An aerated wafer comprising hydrophobin is provided. A process for producing the product is also provided.

## Description

### Technical Field of the Invention

The present invention relates to wafers. In particular it relates to aerated baked wafers, frozen confections comprising such products and methods for producing them.

### Background to the Invention

Frozen confections such as ice cream products are often combined with wafers. Examples of such products include wafer cones containing ice cream, sandwich products, where a frozen confection is held between two wafers, and ice creams which contain pieces of wafer as inclusions.

Wafers are composed largely of flour, sugar, fat/oil and water. To produce the product, the mix of ingredients (i.e. a batter) is baked. Due to health concerns, there is an increasing demand for products which contain reduced amounts of sugar, fat and calories. Thus it would be desirable to produce wafers that have all the properties of conventional products, but which contain reduced amounts of these.

One possible way to achieve this would be to aerate the batter, and hence increase the volume of the wafer, so that, for a given product volume, there is less sugar / fat / calories. Mixes/batters are not normally subjected to aeration before baking. Indeed, it is not straightforward to aerate them. Although there are several possible methods, they all have substantial disadvantages. Mechanical aeration (e.g. by whipping) is not used because the shear during aeration results in the aggregation of gluten from the flour leading to formation of lumps and poor texture. Raising agents / baking powders (e.g. a mix of cream of tartar and sodium bicarbonate) cause aeration by means of a chemical reaction which generates carbon dioxide. US 4 629 628 discloses a process for making wafers wherein the batter contains a chemical raising agent such as sodium bicarbonate. However, the chemical reaction is quite slow, which means that it is not ideal for making aerated wafers due to their short baking time. It also has other disadvantages, such as increasing the sodium content of the product, limitations on the overrun that can be achieved by virtue of the maximum level of addition of the baking powder, and the difficulty of controlling the aeration process. 'Biological' aeration, i.e. using yeast to produce carbon dioxide has the disadvantages that the fermentation takes a long time and requires a certain amount of humidity. Moreover, it cannot be used if the baking temperature is high since this would kill the yeast. Yeast can also introduce off flavours. An alternative method to produce an aerated batter is to produce a foam, for example by using egg-white, which is then combined with the batter before baking. However, egg is an expensive ingredient and its presence at the levels required to obtain high overruns can affect the texture of the product (e.g. the crispness) so it is not suitable for all applications. Thus there remains a need for an improved method of producing aerated wafers.

### Brief Description of the Invention

In our EP-A 1 623 631 we have previously found that a fungal protein termed hydrophobin allows the production of foams with excellent stability to disproportionation and coalescence. We have now found that by using hydrophobin to form a stable foam which is combined with the batter, wafers can be produced with properties similar to conventional wafers, but which contain reduced amounts of fat, sugar and calories for a given product volume.

By creating the foam separately from the batter, there is no need to shear the batter, thereby avoiding damaging the gluten. Also, there is no delay with respect to reaction time. High overruns can be achieved and it is straightforward to control the process. Moreover we have found that using hydrophobin results in very small air bubbles which are not visible to the consumer and which are not detrimental to the texture. Accordingly, in a first aspect, the present invention provides an aerated wafer comprising hydrophobin.

Preferably the aerated wafer comprises at least 0.001 wt% hydrophobin.

Preferably the aerated wafer comprises at most 1 wt% hydrophobin.

Preferably the hydrophobin is in isolated form.

Preferably the hydrophobin is soluble in water.

Preferably the hydrophobin is a class II hydrophobin.

Preferably the aerated wafer has a mass which is at least 25% less than the mass of the equivalent conventional product.

Moreover, we have found that by using hydrophobin, a particularly simple process can be used to provide aerated wafers, which results in high overruns and uniformly sized, small gas bubbles and which avoids the problems of known processes for producing aerated wafers. Accordingly, in a second aspect the present invention provides a process for producing an aerated wafer according to the first aspect of the invention, the process comprising:
a) aerating an aqueous composition comprising hydrophobin to form a foam;
b) combining the foam with a mix for a wafer to form an aerated mix;
c) baking the aerated mix.

Preferably the aerated mix has an overrun of from 5 to 150%, more preferably from 10 to 100%, most preferably from 20 to 60%.

In another aspect, the present invention provides a frozen confection product comprising a wafer according to the invention.

### Detailed Description of the Invention

Unless defined otherwise, all technical and scientific terms used herein have the same meaning as commonly understood by one of ordinary skill in the art. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc., and the full version entitled Current Protocols in Molecular Biology.

All percentages, unless otherwise stated, refer to the percentage by weight, with the exception of percentages cited in relation to the overrun.

### Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

Xₙ-C-X₅₋₉-C-C-X₁₁₋₃₉-C-X₈₋₂₃-C-X₅₋₉-C-C-X₆₋₁₈-C-Xₘ (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

Xₙ-C-X₁₋₅₀-C-X₀₋₅-C-X₁₋₁₀₀-C-X₁₋₁₀₀-C-X₁₋₅₀-C-X₀₋₅-C-X₁₋₅₀-C-Xₘ (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, α-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are generally relatively insoluble whereas those of class II hydrophobins readily dissolve in a variety of solvents. Preferably the hydrophobin is a class II hydrophobin. Preferably the hydrophobin is soluble in water, by which is meant that it is at least 0.1 % soluble in water, preferably at least 0.5%. By at least 0.1 % soluble is meant that no hydrophobin precipitates when 0.1 g of hydrophobin in 99.9 mL of water is subjected to 30,000 g centrifugation for 30 minutes at 20°C.

Hydrophobin-like proteins (e.g."chaplins") have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, may form only up to one disulphide bridge since they may have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The amount of hydrophobin present in the product will generally vary depending on the formulation and volume of the gas phase. Typically, the product will contain at least 0.001 wt%, hydrophobin, more preferably at least 0.005 or 0.01 wt%. Typically the product will contain less than 1 wt% hydrophobin, more preferably less than 0.5 wt%, for example about 0.1 wt%. The hydrophobin can be from a single source or a plurality of sources e.g. a mixture of two or more different hydrophobins.

The hydrophobin is added in a form and in an amount such that it is available to stabilise the gas phase, i.e. the hydrophobin is deliberately introduced for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added in an isolated form, typically at least partially purified, such as at least 10% pure, based on weight of solids. By "isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

### Wafers

Wafers are defined herein to mean a food product which is produced by baking a mix comprising flour, sugar, fat/oil and water, and which is not normally deliberately aerated (e.g. by raising agents or yeast). Thus baked products such as bread or other fermented baked products (which are aerated by yeast) and chemically raised baked products are outside the scope of the invention.

A typical wafer mix (batter) comprises 30-50%, preferably 35-45% wheat flour, 10 -25%, preferably 15-20% sugar, 2-10%, preferably 3-6% fat and 25-45%, preferably 30-40% water. The water content of the wafer is small (<10%), since most of the water is driven off during the baking process. Hence the amounts of the ingredients in baked wafers are proportionately higher.

The flexible nature of wafers immediately after baking allows them to be shaped, e.g. to form a rolled cone from a flat sheet wafer.

The mix and wafer produced from it are aerated. The term "aerated" means that gas has been intentionally incorporated into a product in the form of discrete bubbles. The gas is normally air, but may be any food-grade gas. Conventional wafers may have a porous structure which is formed during baking as the water in the batter is driven off as steam. This is not within the meaning of the term "aerated" as used herein. The extent of aeration is measured in terms of "overrun", which is defined as:

where the weights refer to a fixed volume of aerated mix and unaerated mix. Overrun is measured at atmospheric pressure. Preferably the mix and product each have an overrun of at least 5%, more preferably at least 10%, most preferably at least 20%. Preferably the mix and product each have an overrun of at most 150%, more preferably at most 120%, most preferably at most 100%.

The flour used in the mixes and products of the invention is preferably wheat flour (which contains gluten). Fats / oils that may be used include coconut oil, palm oil, palm kernel oil, cocoa butter, milk fat, sunflower oil, safflower oil, olive oil, linseed oil, soybean oil, rapeseed oil, and mixtures, fractions or hydrogenates thereof. Sugars that may be used include simple sugars such as sucrose, fructose, lactose, and dextrose; corn / glucose syrups and invert sugar. In addition, the wafers may contain other ingredients conventionally found in such products, such as starch, salt, flavours, colours (e.g. caramel), egg, milk, cocoa powder, inulin, emulsifiers (e.g. lecithin), stabilisers, preservatives and inclusions such as pieces of nuts, fruit and chocolate. As pointed out above, the mix and product have no need of and therefore preferably do not contain chemical raising agents or yeast.

The aerated wafers may be produced by a process comprising: aerating an aqueous composition comprising hydrophobin to form a foam; then combining the foam with a mix for a wafer to form an aerated mix; and then baking the aerated mix.

Preferably the baked product has a mass which is at least 25% less than the mass of the equivalent conventional product (i.e. a product having exactly the same composition except that it does not contain hydrophobin), more preferably the mass is from 30 to 50% less.

The wafer can be combined with a frozen confection, such as ice cream, sorbet, water ice, fruit ice, frozen yoghurt and the like to form a frozen confection product, for example a wafer cone containing ice cream, a sandwich product, where the frozen confection is held between two wafers, and ice creams which contain pieces of wafer as inclusions.

The present invention will now be further described with reference to the following examples which are illustrative only and non-limiting.

### Examples

### Example 1: Wafers

A batter was produced having the formulation shown in Table 1.

**Table 1**

| **Ingredient** | **Amount (wt%)** |
|---|---|
| Wheat flour | 40.0 |
| Potato starch | 2.1 |
| Sucrose | 17.5 |
| Salt | 0.6 |
| Coconut oil | 4.0 |
| Lecithin | 0.3 |
| Water | 35.5 |

The batter was produced by mixing the flour, starch, sugar and salt together. The water was then added and the mixture was blended in a Hobart mixer at a speed setting of 2 for 1 minute. The coconut oil was melted and the lecithin was mixed in; this was then added to the flour mix and blended for a further 1 minute using the Hobart mixer, so that a homogeneous batter was formed. It is important not to excessively shear the batter in order to avoid the risk of causing gluten aggregation which leads to the formation of lumps. It is important to use the batter within about one hour of its preparation (otherwise the viscosity of the batter becomes very high over storage for longer periods of time).

Hydrophobin HFBII was obtained from VTT Biotechnology, Finland. It had been purified from *Trichoderma* reeseiessentially as described in WO00/58342 and Linder et al., 2001, Biomacromolecules 2: 511-517. A 100 ml aqueous solution of 0.1 wt% HFBII was aerated to a volume of 200ml using an Aerolatte hand-held battery-powered whisk (Aerolatte Ltd, Radlett Hertfordshire, UK). The whisk rotor is a wire coil shaped in a horizontal circle with an outer diameter of 22 mm rotated about a vertical axis through its centre at a rotational speed of approximately 12,000 rpm. The foam was allowed to drain and after 20 minutes the free water was removed by pipette and discarded, in order to minimise the amount of water added to the batter.

67ml of the foam was then folded into 133 ml of the batter using a metal palette knife to form approximately 200ml of aerated batter having an overrun of about 50% (calculated by measuring the density of the batter, obtained by weighing a known volume of the aerated batter).

A comparative example was obtained by mixing 100ml of water with 20g of dried egg white. A foam was produced using an Aerolatte whisk as described above. 67ml of the drained foam was then folded into 133 ml of the batter using a metal palette knife to form approximately 200ml of aerated batter having an overrun of about 16%. The batter was quite viscous and difficult to handle. It had a relatively low overrun and required a large amount of egg protein to form the foam.

200ml of unaerated batter to which hydrophobin foam had not been added was used to make a further comparative example.

Wafers were produced from the unaerated batter as follows: 15ml of the batter was placed onto a pre-heated waffle maker (Cloer Hörncheuautimat 271, used at heat setting 2) consisting of two hinged hot plates. The plates are then closed together, forcing the batter into a roughly circular sheet approximately 2mm thick. After 45 seconds, the plates were opened, the part-cooked wafer was turned over, the plates were closed again for a further 45 seconds. Turning the wafer over half-way through cooking allows steam to escape and ensures uniform cooking. The same process was used for the aerated batters, except that the cooking time was 30 seconds on each side, since the aerated batters contained less water per unit volume. After cooking, the wafers were removed from the plates and quickly shaped into cones while they were still warm and flexible.

The cooked wafers were weighed (Table 2). Since the same volume of batter was used to make both the unaerated and aerated wafers, the cooked wafers were the same size. However, the since the aerated batters contained gas bubbles, they weighed less. The texture and visual appearance of the wafers were also assessed. The wafer aerated using HFB II was paler in colour than the unaerated one as expected, but no gas bubbles or pinholes were visible. Both wafers had good, crispy textures. The presence of the egg protein made the wafers less brittle and crunchy. Large air cells were visible in these wafers leading to the presence of pin holes, due to the relative coarseness and instability of the egg white foam.

**Table 2**

| **Sample** | **Overrun of batter (%)** | **Mass of wafer (g)** |
|---|---|---|
| Unaerated | 0% | 10.1 |
| Aerated batter with egg white | 16% | 8.7 |
| Aerated batter with HFB II | 50% | 6.8 |

In summary, the examples demonstrate that aerated wafers can be successfully produced by using hydrophobin. The resulting products weigh less (for a given volume) than conventional unaerated products and therefore have reduced amounts of sugar, fat and calories. The aerated wafers produced using hydrophobin have improved properties, in particular smaller gas bubbles and higher overrun, compared to products aerated by other methods.

The various features and embodiments of the present invention, referred to in individual sections above apply, as appropriate, to other sections, mutatis mutandis. Consequently features specified in one section may be combined with features specified in other sections, as appropriate. All publications mentioned in the above specification are herein incorporated by reference. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

## Claims

1. An aerated wafer comprising hydrophobin .

2. A product according to claim 1 which comprises at least 0.001 wt% hydrophobin.

3. A product according to claim 1 or claim 2 which comprises at most 1 wt% hydrophobin.

4. A product according to any of claims 1 to 3 wherein the hydrophobin is in isolated form.

5. A product according to any of claims 1 to 4 wherein the hydrophobin is soluble in water

6. A product according to any of claims 1 to 5 wherein the hydrophobin is a class II hydrophobin.

7. A product according to any of claims 1 to 6 which has a mass which is at least 25% less than the mass of the equivalent conventional product.

8. A process for producing a wafer according to claims 1 to 7, the process comprising:
a) aerating an aqueous composition comprising hydrophobin to form a foam;
b) combining the foam with a mix for a wafer to form an aerated mix;
c) baking the aerated mix.

9. A process according to claim 8 wherein the aerated mix has an overrun of from 5 to 150%.

10. A process according to claim 8 or claim 9 wherein the aerated mix has an overrun of from 20 to 60%.

11. A frozen confection product comprising a wafer according to any of claims 1 to 7.
